# EUROPEAN PATENT APPLICATION

(11) **EP 0 545 486 A1**
(43) Date of publication of application: **09.06.1993**
(21) Application number: 92203672.8
(22) Date of filing: 27.11.1992
(51) Int. Cl.: F16K 11/085, F16K 39/06, F16K 5/04

(54) **Rotary valve for a control unit with several selectable outlets for water distribution systems**

(30) Priority: 05.12.1991 IT MI911057
(71) Applicant: CLABER S.P.A., I-33080 Fiume Veneto Pordenone (IT)
(72) Inventor: Pasut, Claudio, I-33170 Pordenone (IT); Roman, Gianfranco, I-33087 Pasiano (Pordenone) (IT)
(74) Representative: Mittler, Enrico

(57) **Abstract**

The valve comprises a fixed external casing (1) provided with an internal cavity (5) with an axial inlet port (2) for water from mains and at least two transversal outlet conduits (3, 4) for water to flow toward different water distribution systems, and a rotary internal casing (6) in the form of a cup inserted in said internal cavity (5) of the fixed external casing (1) and provided with a transversal water outlet hole (7) suitable for being placed selectively in communication with one of the conduits (3, 4) by rotation of the rotary internal casing (6). It also comprises an auxiliary internal casing (8) inserted axially in said rotary casing (6) and provided with at least two transversal holes (10, 11) aligned with said outlet conduits (3, 4) of the fixed external casing (1). Said auxiliary casing (8) has one of its end flanges (16) up against a shoulder (18) of the external casing (1) to allow the latter to absorb the hydraulic pressure of the water at inlet without this being transmitted to the rotary internal casing (6).

## Description

The present invention relates to a rotary valve for a control unit with several selectable outlets for water distribution systems.

Control units with several outlets for irrigation systems are known.

One of these control units is, for example, described in the Italian patent application No. 21180 A/90 filed on 2 August 1990 in the name of the same applicant.

It comprises a rotary valve that has the task of placing a water inlet conduit selectively in communication with one or the other of a plurality of outlet conduits communicating with respective irrigation systems to be activated alternately one with the other.

According to said known art, the valve comprises a fixed external casing provided with an internal cavity with a coaxial inlet port for water from mains and at least two transversal outlet conduits for water to flow toward different irrigation systems, and a rotary internal casing in the form of a cup inserted axially in said internal cavity of the fixed external casing and provided with a transversal water outlet hole suitable for being placed selectively in communication with one of said outlet conduits by rotation of the rotary casing.

Again according to the known art the external casing is made of ABS material, while the rotary internal casing is made of acetal resin.

Suitable O-ring seals are interposed between the fixed external casing and the rotary internal casing.

An O-ring seal is in particular present between the internal side wall of the fixed casing and the corresponding external side wall of the rotary casing, in the proximity of the water inlet port.

This type of valve has some drawbacks.

The main one consists in the fact that the water at inlet exerts a strong hydraulic pressure on the rear of the rotary internal casing thrusting it against the adjacent rear wall of the fixed external casing. A strong friction is thus determined between the rotary internal casing and the fixed external casing, that hampers the rotation of the former and enhances the rapid wear of the valve.

In addition, in time the seal in the proximity of the inlet port of the rotary internal casing tends to stiffen and to stick against the internal wall of the fixed casing.

This fact tends to further hamper the rotation of the rotary internal casing.

The object of the present invention is to make a rotary valve capable of overcoming said drawbacks.

According to the present invention such object is attained through a rotary valve comprising a fixed external casing provided with an internal cavity with an axial inlet port for water from mains and at least two transversal outlet conduits for water to flow toward different water distribution systems, and a rotary internal casing in the form of a cup inserted axially in said internal cavity of the fixed external casing and provided with a transversal water outlet hole suitable for being placed selectively in communication with one of said outlet conduits by rotation of the rotary casing, characterized in that it also comprises an auxiliary internal casing in the form of a cup inserted axially in said cavity of the fixed casing and in said rotary casing and provided with at least two transversal holes aligned with said outlet conduits of the fixed casing and with an end flange placed against a shoulder of the fixed external casing to allow the latter to absorb the hydraulic pressure of the water at inlet without this being transmitted to the rotary internal casing.

In such a way the rotary internal casing of the valve can rotate easily inside the fixed external casing, reducing friction and thus the wear of the valve to a minimum.

Acting on the rotary casing there remains but a reduced transversal pressure, due to the presence of but one transversal outlet hole for the water, that is preferably absorbed and made harmless by a suitable engagement between a lateral enlargement of the auxiliary internal casing and the port of the rotary internal casing.

The elimination is thus also made possible of the abovementioned O-ring seal between the fixed external casing and the rotary internal casing, in favour of two seals having a smaller diameter interposed between the auxiliary internal casing and the rotary internal casing and suitable for creating a substantially lower friction, due both to the reduced diameter of the seals themselves and to the friction coefficient of the material constituting the rotary casing (acetal resin) that is lower than that of the fixed casing (ABS).

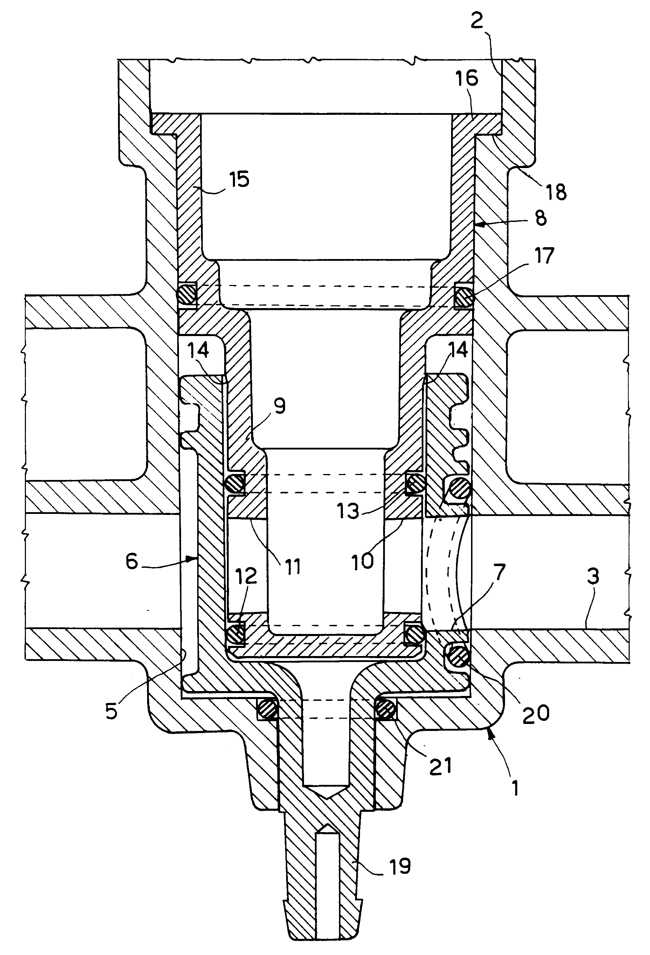

The features of the present invention shall be made evident by an embodiment illustrated as a non-limiting example in the only figure of the enclosed drawing.

With reference to the drawing, the valve comprises a fixed external casing 1, made of ABS material, provided with an internal cavity 5 with an axial inlet port 2 for water from mains and two transversal outlet conduits 3, 4 for water to flow toward different water distribution systems, for example for irrigation, not shown.

In the internal cavity 5 of the fixed external casing 1 there is a rotary internal casing 6 in the form of a cup, made of acetal resin, provided with a transversal water outlet port 7 surrounded by an O-ring seal 20 and suitable for being placed selectively in communication with one or the other of the transversal conduits 3, 4 by rotation of the rotary casing 6.

Inside the rotary casing 6, and thus in turn in the internal cavity 5, there is inserted axially an auxiliary internal casing 8 in the form of a cup, made as for the rotary casing 6 in acetal resin.

It comprises a lower part 9 provided with transversal holes 10, 11 aligned with the outlet conduits 3, 4 of the fixed external casing 1 and provided with O-ring seals 12, 13 interposed between said lower part of the auxiliary casing 8 and the rotary casing 6.

Thanks to the particular material, acetal resin, of which the rotary internal casing 6 is made, the seals 12, 13 create substantially no friction against the internal wall of the rotary casing 6, as would otherwise be the case with seals in contact with the ABS material of which the fixed external casing is made.

The lower part 9 has at its upper end a lateral enlargement 14 in engagement with the upper port of the rotary internal casing 6 to reduce to a minimum any possibility of transversal clearance between the auxiliary casing 8 and the rotary casing 6 as a result of the water pressure and of the presence of but one outlet hole 7.

The auxiliary internal casing 8 also has an upper part 15 provided with a top flange 16 that is axially up against a shoulder 18 of the external casing 1 to allow the latter to absorb the hydraulic pressure of the water at inlet without this being transmitted to the rotary internal casing 6.

An O-ring seal 17 is interposed between the auxiliary internal casing 8 and the fixed external casing 1.

Between the fixed external casing 1 and a terminal stem 19 of the rotary internal casing 2 there is lastly interposed an O-ring seal 21.

## Claims

1. Rotary valve comprising a fixed external casing (1) provided with an internal cavity (5) with an axial inlet port (2) for water from mains and at least two transversal outlet conduits (3, 4) for water to flow toward different water distribution systems, and a rotary internal casing (6) in the form of a cup inserted axially in said internal cavity (5) of the fixed external casing (1) and provided with a transversal water outlet hole (7) suitable for being placed selectively in communication with one of said outlet conduits (3, 4) by rotation of the rotary casing (6), characterized in that it also comprises an auxiliary internal casing (8) in the form of a cup inserted axially in said cavity (5) of the fixed casing (1) and provided with at least two transversal holes (10, 11) aligned with said outlet conduits (3, 4) of the fixed casing (1) and with an end flange (16) placed against a shoulder (18) of the fixed external casing (1) to allow the latter to absorb the hydraulic pressure of the water at inlet without this being transmitted to the rotary internal casing (6).

2. Valve according to claim 1, characterised in that a lower part of auxiliary internal casing (8) has a lateral enlargement (14) in engagement with the port of the rotary internal casing (6) to limit a possible transversal clearance between the auxiliary internal casing (8) and the rotary internal casing (6) caused by the pressure of the water at inlet.

3. Valve according to claim 1, characterised in that said rotating internal casing (6) and said auxiliary internal casing (8) are made of acetal resin and there are two O-ring seals (13, 12) interposed between said internal casings (6, 8) above and below said tranvsersal holes (10, 11) of the auxiliary casing (8).
